# FASCICULE DE BREVET EUROPEEN

(11) **EP 2 878 872 B1**
(45) Date de publication et mention de la délivrance du brevet: **24.08.2016**
(21) Numéro de dépôt: 14195572.4
(22) Date de dépôt: 01.12.2014
(51) Int. Cl.: F16L 37/084, F16L 37/42

(54) **Raccord rapide pour la jonction amovible de deux canalisations**
Schnellanschluss zur lösbaren Verbindung von zwei Rohren
Quick coupling for detachable connection of two pipes

(30) Priorité: 02.12.2013 FR 1361960
(43) Date de publication de la demande: 03.06.2015
(73) Titulaire: STAUBLI FAVERGES, 74210 Faverges (FR)
(72) Inventeur: Tiberghien, Alain-Christophe, 74320 Sevrier (FR); Durieux, Christophe, 73200 Gilly sur Isere (FR); Bahno, Igor, 73400 Ugine (FR)
(74) Mandataire: Lavoix

(56) Documents cités:
- EP-A1- 1 219 885
- FR-A1- 2 511 115
- FR-A1- 2 865 259

## Description

La présente invention concerne un raccord rapide pour la jonction amovible de deux canalisations parcourues par un fluide.

Les raccords rapides sont adaptés aux ambiances polluées et permettent de raccorder des canalisations flexibles dans des systèmes soumis à des vibrations, notamment des engins motorisés équipés de tuyaux dans des endroits peu accessibles.

Dans le domaine des véhicules, en particulier des engins militaires, les raccords rapides sont employés pour alimenter des sous systèmes en eau, carburant, air ou gaz par l'intermédiaire de différentes canalisations.

Par le brevet FR-B-2 865 259, on connait un raccord rapide qui comprend deux éléments mâle et femelle propres en s'emmancher axialement et provoquant l'ouverture d'un clapet monté dans le corps de l'élément femelle. Ce corps est équipé d'un verrou chargé, monté à coulissement dans le corps et percé d'une ouverture centrale pour l'emmanchement de l'élément mâle. Le verrou est bipartite et un organe de sécurité chargé axialement est apte à bloquer le verrou.

Pour déconnecter l'élément mâle et l'élément femelle, il est nécessaire d'exercer un effort supplémentaire d'emmanchement afin d'enfoncer davantage l'élément mâle dans l'élément femelle, puis d'exercer un effort sur le verrou. Ainsi, le déverrouillage des éléments mâle et femelle est compliqué et nécessite l'emploi des deux mains de l'utilisateur, dans un espace de manoeuvre souvent restreint.

Par ailleurs, lorsque les éléments mâle et femelle sont emmanchés, les vibrations auxquelles le raccord est soumis tendent à déplacer les éléments mobiles du raccord par effet d'inertie. Ces mouvements parasites risquent d'amener les mécanismes de verrouillage dans une position déverrouillée, dans laquelle l'élément mâle est libre de sortir de l'élément femelle.

Le brevet FR-A-1 487 324 divulgue un raccord à verrou qui est équipé d'un goujon de blocage du verrou dans sa position verrouillée. Pour désaccoupler les éléments du raccord, il est nécessaire au préalable d'exercer une action sur le goujon afin de débloquer le verrou, puis de déverrouiller les deux éléments de raccord. Ainsi, pour désemmancher les éléments mâle et femelle, il est nécessaire de réaliser deux manoeuvres successives selon deux axes de manoeuvre distincts.

En outre, le raccord selon FR-A-1 487 324 ne permet pas d'incorporer un capot de protection empêchant l'intrusion de corps polluants car le goujon doit rester accessible, ce qui est néfaste pour la durée de vie du raccord.

C'est à ces inconvénients qu'entend plus particulièrement remédier l'invention en proposant un raccord rapide dont la déconnexion est aisée, et permettant d'intégrer un système d'étanchéité efficace pour protéger le raccord dans les milieux pollués.

A cet effet, l'invention a pour objet un raccord rapide pour la jonction amovible de deux canalisations parcourues par un fluide, le raccord comprenant une partie mâle et un élément femelle aptes à s'emmancher l'un dans l'autre selon un axe longitudinal. L'élément femelle est équipé :
- d'un dispositif de verrouillage monté à coulissement dans un corps de l'élément femelle selon un axe radial et percé d'au moins une ouverture pour l'emmanchement de la partie mâle. Une paroi de l'ouverture est équipée d'un premier moyen de retenue. Le dispositif de verrouillage est mobile entre :
   - une première position dans laquelle le premier moyen de retenue est apte à coopérer avec un deuxième moyen de retenue correspondant de la partie mâle pour retenir la partie mâle dans l'élément femelle à une première profondeur d'emmanchement en configuration emmanchée de passage de fluide,
   - une deuxième position dans laquelle le dispositif de verrouillage autorise la partie mâle à se libérer de l'élément femelle hors de la première profondeur d'emmanchement,
- d'un dispositif de sécurité apte à maintenir le dispositif de verrouillage dans sa première position lorsque la partie mâle est en configuration emmanchée dans l'élément femelle.

Lorsque le dispositif de verrouillage est dans sa première position une action sur le dispositif de sécurité selon l'axe radial libère le dispositif de verrouillage de sa première position.

Grâce à l'invention, une action sur le dispositif de sécurité permet, en un seul geste et à l'aide d'une seule main, de déverrouiller le dispositif de verrouillage, entrainant automatiquement la sortie de l'élément mâle hors de l'élément femelle. Le dispositif de sécurité est incorporé au sein du dispositif de verrouillage si bien qu'il reste compact. Un tel dispositif de sécurité est adapté à la mise en place d'un capot de protection autour de l'embouchure de l'élément femelle et du dispositif de sécurité, ce qui permet de protéger le raccord des intrusions de poussière et de corps étrangers.

Selon des aspects avantageux mais non obligatoires de l'invention, un tel raccord peut incorporer une ou plusieurs des caractéristiques suivantes, prises dans toute combinaison techniquement admissible :
- Le dispositif de sécurité comprend un organe de sécurité monté à coulissement sur un arbre s'étendant perpendiculairement à l'axe radial. L'organe de sécurité est mobile entre :
   - une première position dans laquelle le dispositif de verrouillage verrouille la partie mâle et l'élément femelle en configuration emmanchée et dans laquelle l'organe de sécurité est apte à prendre appui radialement sur la partie mâle sur une zone diamétralement opposée au premier moyen de retenue et
   - une deuxième position dans laquelle l'organe de sécurité ne prend pas appui sur la partie mâle.
- Le dispositif de sécurité comprend des moyens élastiques qui tendent à repousser l'organe de sécurité dans sa première position.
- Le dispositif de sécurité comprend un bouton logé partiellement dans le dispositif de verrouillage et mobile selon l'axe radial dans le dispositif de verrouillage.
- L'action exercée sur le bouton provoque le déplacement du bouton entre une position de repos et une position de déverrouillage.
- L'action manuelle, exercée sur le bouton, entraine un déplacement de l'organe de sécurité depuis sa première position vers sa deuxième position.
- Le déplacement de l'organe de sécurité le long de l'axe longitudinal provoque un déplacement du bouton le long de l'axe radial.
- Le bouton et l'organe de sécurité comprennent chacun une surface oblique s'étendant dans un plan formant un angle non nul avec un plan longitudinal perpendiculaire à l'axe radial. Une normale aux surfaces obliques s'étend dans un plan passant par l'axe longitudinal et l'axe radial. Durant le déplacement de l'organe de sécurité depuis sa première position vers sa deuxième position, les surfaces obliques du bouton et de l'organe de sécurité glissent en contact surfacique l'une contre l'autre.
- L'angle est égal à 45°.
- La partie mâle comprend un adaptateur logé à l'intérieur de l'élément femelle et comprenant des billes mobiles radialement et aptes à maintenir un embout mâle du raccord en configuration emmanchée dans l'adaptateur, lorsque le dispositif de verrouillage est dans une première position dans laquelle il maintient l'adaptateur à une première profondeur d'emmanchement de l'adaptateur dans l'élément femelle et en configuration emmanchée de passage de fluide.
- Le dispositif de sécurité comprend un moyen de retenue additionnel, tel qu'une dent, apte à maintenir la partie mâle emmanchée dans l'élément femelle lorsque le dispositif de verrouillage est maintenu dans sa deuxième position.
- Le dispositif de verrouillage comprend une première partie et d'une seconde partie logée à l'intérieur de la première partie.
- Le dispositif de verrouillage comprend un moyen de retenue supplémentaire apte à retenir la partie mâle dans l'élément femelle à une seconde profondeur d'emmanchement dans une configuration d'obturation du passage de fluide entre les canalisations.
- Durant une étape intermédiaire de connexion, la partie mâle repousse l'organe de sécurité vers sa deuxième position.
- Une enveloppe étanche et souple est disposée sur l'élément femelle, et recouvre le bouton et le dispositif de verrouillage, notamment un capot réalisé en une matière élastique.

L'invention sera mieux comprise et d'autres avantages de celle-ci apparaitront plus clairement à la lecture de la description qui va suivre de quatre modes de réalisation d'un raccord conforme à l'invention, donnée uniquement à titre d'exemple et faite en référence aux dessins annexés dans lesquels :
- la figure 1 est une coupe partielle d'un élément mâle et d'un élément femelle d'un raccord conforme à l'invention, en configuration déconnectée, s'étendant le long d'un axe longitudinal représenté en ligne brisée, l'élément mâle étant aligné sur l'axe longitudinal ;
- les figures 2 et 3 sont des coupes partielles du raccord de la figure 1, respectivement au terme d'une première et d'une deuxième étapes de connexion ;
- la figure 4 est une coupe partielle du raccord de la figure 1 en configuration connectée ;
- la figure 5 est une coupe selon la ligne Y-Y' à la figure 4 ;
- la figure 6 est une coupe partielle du raccord de la figure 1 au terme d'une première étape de déconnexion ;
- la figure 7 est une coupe transversale selon la ligne Y-Y' à la figure 6 ;
- les figures 8 et 9 sont des coupes partielles du raccord de la figure 1, respectivement au terme d'une deuxième et troisième étapes de déconnexion ;
- la figure 10 est une vue en perspective éclatée d'un dispositif de sécurité équipant l'élément femelle du raccord de la figure 1 ;
- la figure 11 est une vue en perspective éclatée, sous un autre angle, du dispositif de sécurité de la figure 10 ;
- les figures 12 à 14 sont des coupes partielles longitudinales de raccords conforme à un deuxième, troisième et quatrième modes de réalisation de l'invention.

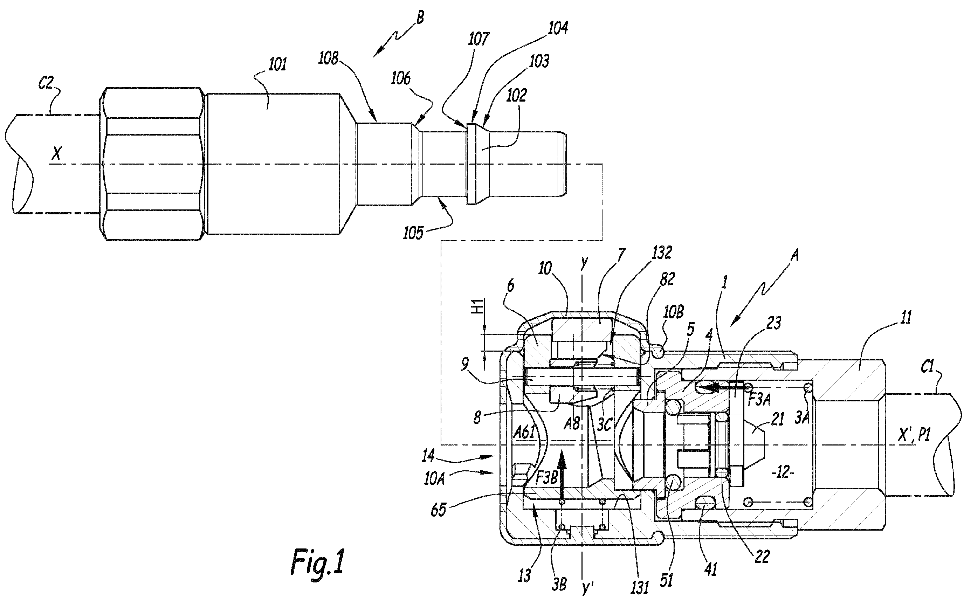

Le raccord représenté aux figures 1 à 11 est de type mono-impulsion, ou à actionnement unique avec dispositif anti-coup de fouet, et comprend un élément femelle A et une partie mâle complémentaire, qui est constituée par un élément ou embout mâle B dans ce mode de réalisation. Les éléments A et B sont prévus pour s'emmancher l'un dans l'autre dans la direction d'un axe X-X', qui est un axe longitudinal commun aux éléments A et B.

Les éléments A et B sont raccordés respectivement à une canalisation amont C1 et à une canalisation aval C2. La canalisation amont C1 est, elle-même, raccordée à une source de fluide sous pression non représentée, par exemple une source d'air sous pression, la canalisation C2 étant elle-même reliée, par exemple à un organe pneumatique d'un véhicule terrestre.

Le raccord est prévu pour des fluides dont la pression varie entre 2 et 300 bars.

En variante, le fluide s'écoule depuis la canalisation C2 vers la canalisation C1, les termes amont et aval étant alors inversés.

Au sens de l'invention, une partie proximale de l'un des éléments A et B est une partie tournée vers ou proche de la canalisation C1 ou C2, raccordée sur cet élément A ou B, alors qu'une partie distale est une partie tournée vers ou proche de l'autre élément lorsque ces éléments sont en regard l'un de l'autre, prêts à être emmanchés.

Un corps 1 de l'élément femelle A est de forme externe globalement cylindrique à base circulaire, centré sur l'axe X-X' qui est également l'axe longitudinal d'un conduit 12 interne au corps 1, dans lequel est disposé un clapet 2 mobile selon l'axe X-X'.

Le clapet 2 est soumis à l'action de moyens élastiques tels qu'un ressort de rappel 3A qui exerce un effort F3A tendant à plaquer des protubérances 23 d'une tête 21 du clapet 2, pourvue d'un joint torique 22, contre une bague de support 4 montée à l'intérieur du corps 1 et immobilisée par un élément de raccordement 11 vissé dans le corps 1, du côté de la canalisation amont C1. Un joint torique 41 est intercalé radialement, c'est-à-dire selon une direction perpendiculaire et sécante à l'axe X-X', entre la bague de support 4 et l'élément de raccordement 11.

Une bague 5 pourvue d'une collerette annulaire est intercalée le long de l'axe X-X' entre le corps 1 de l'élément femelle A et la bague de support 4. Un joint torique 51 est disposé dans une gorge délimitée de part et d'autre par la bague de support 4 et la bague 5.

Le corps 1 est pourvu d'un logement borgne 13 s'étendant globalement dans la direction d'un axe Y-Y' perpendiculaire et sécant à l'axe X-X', c'est-à-dire radial par rapport au corps 1. A l'intérieur du logement 13 est monté, à coulissement le long de l'axe Y-Y', un dispositif de verrouillage constitué par un verrou 6 sur lequel des moyens élastiques, tels qu'un ressort de compression 3B, exercent un effort élastique F3B dirigé radialement à l'opposé d'un fond 131 du logement 13, c'est-à-dire en direction d'un débouché 132 du logement 13.

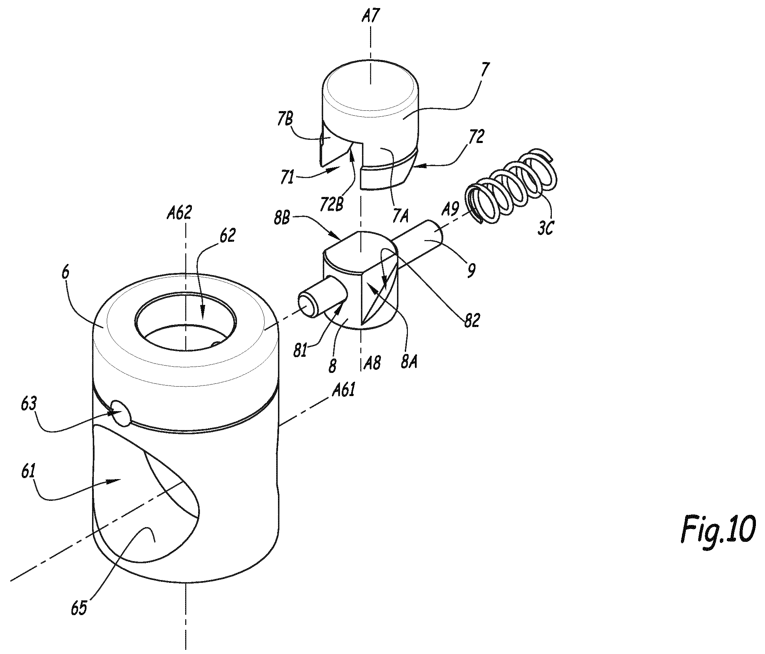

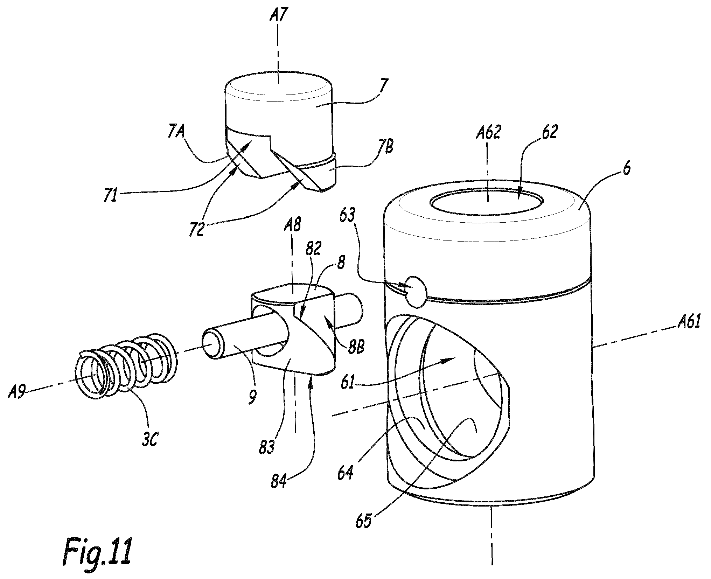

Le verrou 6, mieux visible aux figures 10 et 11, comprend une ouverture traversante 61 centrée sur un axe A61 parallèle à l'axe longitudinal X-X' et prévue pour recevoir un corps 101 de l'élément mâle B.

Une ouverture 62 radiale du verrou 6 débouche, le long de l'axe Y-Y', au niveau d'une extrémité supérieure du verrou 6 située du côté du débouché 132 du logement borgne 13 du corps 1. A l'opposé du débouché 132, l'ouverture 62 est délimitée par une extrémité inférieure du verrou 6 formée par une paroi de fond 65. La paroi de fond 65 est située, le long d'un axe central A62 de l'ouverture 62 coïncidant avec l'axe Y-Y', à l'opposé du débouché de l'ouverture 62, en d'autres termes, du côté du fond 131 du logement borgne 13. Le long de l'axe A62, l'ouverture 62 débouche également dans l'ouverture traversante 61.

Deux trous 63 coaxiaux s'étendant le long d'un axe A9 globalement parallèle à l'axe X-X' sont ménagés dans le verrou 6 et reçoivent les extrémités d'un arbre 9 logé à l'intérieur du verrou 6.

La paroi de fond 65 du verrou 6 est équipée de premiers moyens de retenue formés par un relief 64 de forme globalement annulaire et centré sur l'axe A61. Le relief 64 comporte une surface tronconique 642 dont le diamètre augmente le long de l'axe X-X' dans une direction allant de l'extrémité distale vers l'extrémité proximale de l'élément femelle A. La surface tronconique 642 est prolongée du côté de l'extrémité proximale de l'élément femelle A par une surface cylindrique 644 dont le diamètre est inférieur à celui de l'ouverture traversante 61.

En l'absence d'action extérieure sur l'élément femelle A, le ressort 3B repousse la paroi de fond 65 du verrou 6 contre la bague à collerette 5 qui est partiellement logée à l'intérieur de l'ouverture traversante 61.

Un organe de sécurité 8 est monté à coulissement sur l'arbre 9, dans l'ouverture traversante 61, le long de l'axe A9. L'organe de sécurité 8 comporte un trou 81 à l'intérieur duquel s'étend l'arbre 9.

La forme de l'organe de sécurité 8 s'inscrit à l'intérieur d'une enveloppe cylindrique à base circulaire centrée sur un axe A8, et comporte deux méplats 8A et 8B parallèles aux axes X-X' et Y-Y'. L'axe A8 est coaxial avec les axes Y-Y' et A62. Chaque méplat 8A et 8B est de forme globalement triangulaire, une diagonale de ce triangle étant adjacente à une surface oblique 82. Les surfaces obliques 82 sont coplanaires et, en configuration assemblée de l'élément femelle A, elles s'étendent dans un plan qui forme un angle α non nul avec un plan longitudinal P1 qui passe par l'axe X-X' et qui est perpendiculaire à l'axe Y-Y'.

Le diamètre de l'enveloppe cylindrique dans laquelle s'inscrit l'organe de sécurité 8 est strictement inférieur au diamètre de l'ouverture 62 du verrou 6, de sorte que l'organe de sécurité 8 est mobile en translation parallèlement à l'axe X-X' et le long de l'arbre 9, par rapport au verrou 6.

L'organe de sécurité 8 comporte une surface inclinée 84 proximale tournée vers l'axe X-X'.

Des moyens élastiques tels qu'un ressort de compression 3C sont montés autour de l'arbre 9 et prennent appui contre une paroi intérieure du verrou 6 délimitant l'ouverture 62 et contre l'organe de sécurité 8. Le ressort 3C repousse par défaut l'organe de sécurité 8 contre la paroi intérieure du verrou 6, en direction de l'embouchure 14 de l'élément femelle A, c'est-à-dire en direction de l'extrémité distale de l'élément femelle A.

Un bouton 7 est monté sur l'organe de sécurité 8 et s'étend partiellement à l'intérieur de l'ouverture 62. Ainsi, le bouton 7 est logé partiellement dans le verrou 6 et émerge à l'extérieur du verrou 6 lorsque le raccord est dans une configuration emmanchée de passage de fluide.

Le bouton 7 est de forme généralement cylindrique à base circulaire, et s'étend le long d'un axe A7 aligné avec l'axe A62 du verrou 6 et avec l'axe Y-Y'. Le bouton 7 est propre à être actionné manuellement vers l'intérieur du corps 1, depuis l'extérieur de ce corps.

Le diamètre de l'enveloppe cylindrique du bouton 7 est sensiblement égal au diamètre de l'ouverture 62 de verrou 6, de sorte que le bouton 7 est monté à coulissement dans l'ouverture traversante 61 du verrou 6, le long de l'axe Y-Y'.

Une fente 71 est ménagée dans le bouton 7 parallèlement à l'axe A9 et reçoit l'organe de sécurité 8 qui est bloqué de part et d'autre de la fente 71 par des parois latérales 7A et 7B du bouton 7. Les parois latérales 7A et 7B comportent chacune une surface oblique 72 s'étendant dans un plan qui forme un angle α non nul avec le plan longitudinal P1. L'angle α est égal à l'angle délimité entre les surfaces obliques 82 de l'organe de sécurité 8 et le plan longitudinal P1. En configuration assemblée de l'élément femelle A, les surfaces obliques 72 du bouton 7 viennent au contact des surfaces obliques 82 de l'organe de sécurité 8.

Une enveloppe étanche telle qu'un capot ou manchon de protection 10 réalisé à partir d'un matériau souple et élastique, par exemple une matière caoutchouteuse telle qu'un élastomère, est disposé sur le corps 1 de l'élément femelle A, du côté de l'embouchure 14, et recouvre le verrou 6 et le bouton 7 de façon à les protéger des pollutions extérieures. Ainsi le bouton 7 est protégé tout en restant manoeuvrable. Le capot de protection 10 comporte une ouverture 10A débouchant dans le conduit 12 du corps 1, pour l'introduction de l'élément mâle B. Un bourrelet annulaire 10B du capot 10 est disposé dans une gorge correspondante du corps 1, pour le maintien en position du capot 10 sur le corps 1.

Lorsque l'élément femelle A est utilisé avec le bouton 7 orienté vers le haut, comme représenté à la figure 1, le bouton 7 est retenu dans le verrou 6 par gravité.

Lorsque le bouton 7 est orienté vers le bas, le bouton 7 tend à se séparer du corps 1 de l'élément femelle A. Le manchon 10 enveloppe la partie externe du verrou 6 et le bouton 7, de manière à empêcher le bouton 7 de se séparer du corps 1 de l'élément femelle A.

Le bouton 7, l'organe de sécurité 8, l'arbre 9 et le ressort 3C constituent un dispositif de sécurité apte à bloquer le verrou 6 en position verrouillée.

Le corps 101 de l'élément mâle B comporte une gorge 105 de forme annulaire, délimitée d'un côté par une collerette annulaire 102 distale, et de l'autre côté par une première surface tronconique 106 proximale dont le diamètre décroit dans un sens allant de l'extrémité proximale vers l'extrémité distale de l'élément mâle B. Le long de l'axe X-X' et à l'opposé de la gorge 105, la surface tronconique 106 est prolongée par une surface cylindrique 108 dont le diamètre est supérieur à celui du fond de la gorge 105.

La collerette 102 comporte une surface externe cylindrique 104 dont le diamètre est supérieur à celui du fond de la gorge 105, de sorte qu'un épaulement 107 perpendiculaire à l'axe X-X' jouxte l'extrémité distale de la gorge 105. L'organe de sécurité 8 présente une extrémité proximale 83 tournée vers la canalisation C1 et apte à venir en contact contre l'épaulement 107.

La surface cylindrique 104 est prolongée, à l'opposé de la gorge 105, par une surface tronconique 103 dont le diamètre décroit dans un sens allant de l'extrémité proximale vers l'extrémité distale de l'élément mâle B.

La figure 1 montre l'élément mâle B et l'élément femelle A en configuration déconnectée. Dans cette configuration, le ressort 3A repousse le clapet 2 en direction de l'embouchure 14 de l'élément femelle A, dans une première position, ou position fermée, de sorte que le conduit interne 12 de l'élément femelle A est obstrué par le clapet 2, le joint torique 22 étant plaqué radialement contre la bague 4.

Le ressort 3B repousse le verrou 6 à l'opposé du fond 131 du logement borgne 13, dans une première position, ou position sortie, dans laquelle le verrou 6 vient en butée contre la bague à collerette 5 et dépasse du corps 1 d'une première hauteur H1.

Le ressort 3C repousse l'organe de sécurité 8 en direction de l'embouchure 14 de l'élément femelle A, contre le verrou 6 dans une première position, ou position distale. Dans cette position, l'axe A8 de l'organe de sécurité 8 est décalé du côté de l'embouchure 14 de l'élément femelle A par rapport aux axes Y-Y' et A62 et A7.

Le bouton 7 est maintenu dans une position haute, ou position de repos, par rapport au corps 1 de l'élément femelle A car les surfaces obliques 72 du bouton 7 reposent contre les surfaces obliques 82 de l'organe de sécurité 8.

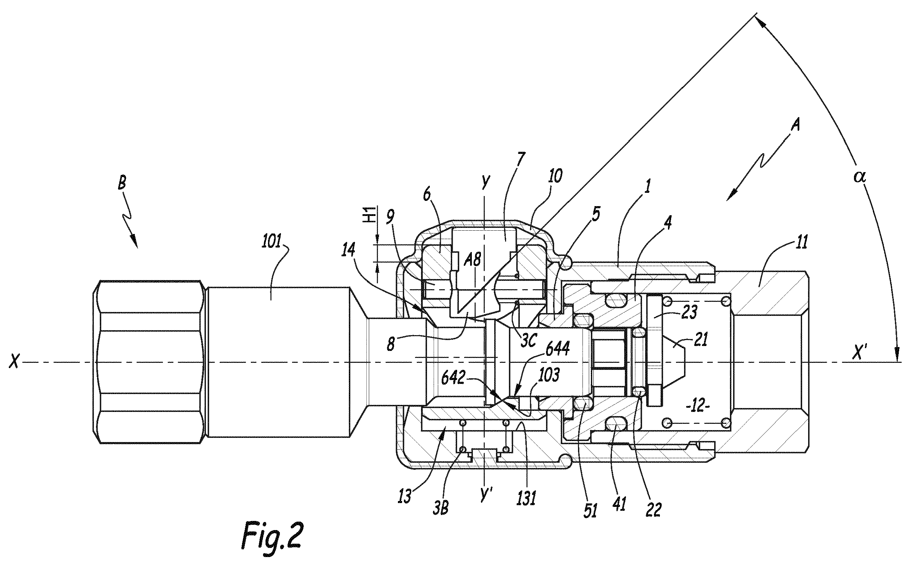

La figure 2 montre le raccord au terme d'une première étape de connexion, dans laquelle l'élément mâle B est introduit dans l'embouchure 14 de l'élément femelle A jusqu'à ce qu'il vienne en butée contre le clapet 2 et commence à repousser ce dernier à l'encontre de la force de rappel F3A du ressort 3A. La première surface tronconique 103 de l'élément mâle B vient au contact de la surface tronconique 642 du relief 64 du verrou 6.

Durant la première étape de connexion, l'élément mâle B n'interagit pas avec l'organe de sécurité 8, qui reste en butée contre le verrou 6, du côté de l'embouchure 14 dans sa position distale. En d'autres termes, l'organe de sécurité 8 ne prend pas appui sur l'élément mâle B.

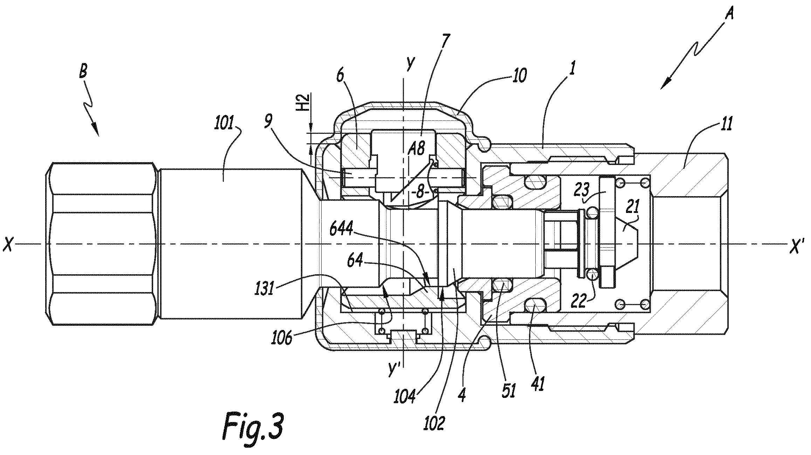

La figure 3 représente le raccord au terme d'une deuxième étape de connexion, dans laquelle l'élément mâle B a continué à progresser dans l'élément femelle A, repoussant davantage le clapet 2 hors de son siège, dans une position ouverte, ou deuxième position, de manière à autoriser le passage du fluide entre les éléments mâle B et femelle A. L'élément mâle B étant entouré par la bague à collerette 5, il reste centré sur l'axe longitudinal X-X'.

Durant la deuxième étape de connexion, la collerette 102 de l'élément mâle B glisse contre le relief 64 du verrou 6, jusqu'à ce que la surface cylindrique 104 de la collerette 102 vienne au contact de la surface cylindrique 644 du verrou 6, ce qui a pour effet de repousser le verrou 6 vers le fond 131 du logement borgne 13, à l'opposé de la force de rappel exercée par le ressort 3B, de manière à permettre l'emmanchement de l'élément mâle B.

Durant la deuxième étape de connexion, la deuxième surface tronconique 106 de l'élément mâle B repousse l'organe de sécurité 8 vers sa position proximale, ou deuxième position, à l'opposé de l'embouchure 14 de l'élément femelle A, à l'encontre de la force de rappel F3C exercée par le ressort 3C.

La coopération des surfaces obliques 72 et 82 constitue un renvoi d'angle qui provoque le déplacement le bouton 7, maintenu au contact de l'organe de sécurité 8 par le capot 10, en direction du fond 131 du logement borgne 13, le long de l'axe radial Y-Y', sans que l'utilisateur ne l'actionne. Les surfaces obliques 72 et 82 glissent en contact surfacique l'une contre l'autre durant ce déplacement.

Une normale aux surfaces obliques 72 et 82 s'étend dans un plan passant par les axes X-X' et Y-Y'.

Ainsi, le mouvement de l'organe de sécurité 8 le long de l'axe X-X' et dans une direction allant de l'extrémité distale vers l'extrémité proximale de l'élément femelle A provoque un déplacement radial du bouton 7 vers l'intérieur du corps 1 de l'élément femelle 1, le long de l'axe Y-Y', dans une position abaissée ou position de déverrouillage.

Au terme de la deuxième étape de connexion, le verrou 6 est dans une position rentrée ou maintien intermédiaire dans laquelle il dépasse du corps 1 d'une deuxième hauteur H2 inférieure à la première hauteur H1.

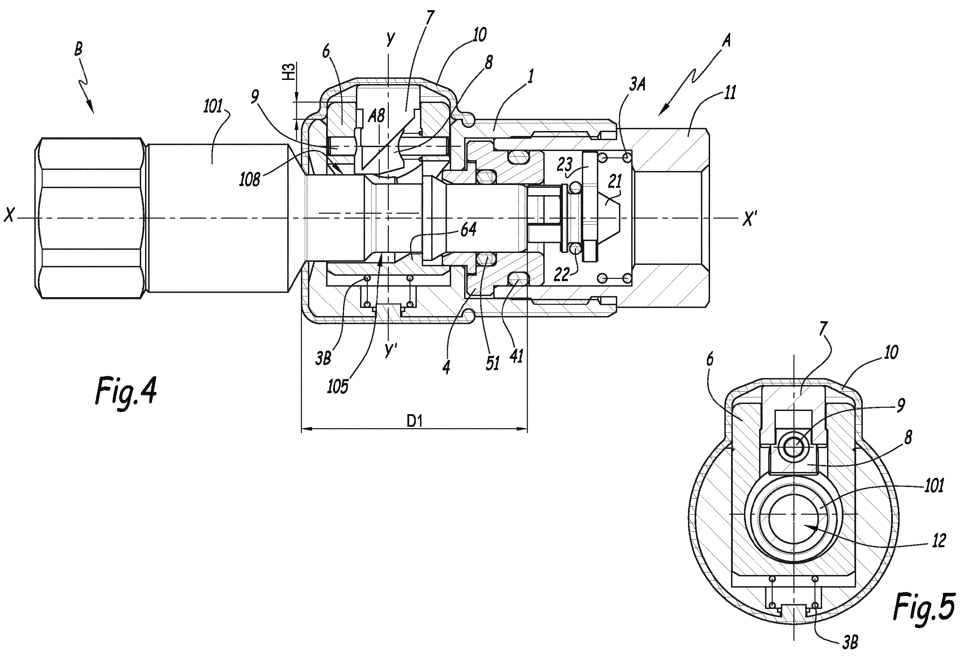

Dans la configuration connectée du raccord, ou configuration emmanchée de passage de fluide, représentée aux figures 4 et 5, la collerette 102 de l'élément mâle B a dépassé le relief 64 qui vient se loger dans la gorge 105 de l'élément mâle B, au contact de l'épaulement 107. Ainsi, le ressort 3B peut repousser le verrou 6 en position sortie.

Le long de l'axe X-X', l'élément mâle B a atteint une première profondeur d'emmanchement dans laquelle le raccord est dans la configuration emmanchée de passage de fluide et dans laquelle le verrou 6 est dans sa première position. La profondeur d'emmanchement est mesurée entre l'extrémité distale de l'élément femelle A et l'extrémité distale de l'élément mâle B.

Le verrou 6 entraine avec lui vers l'extérieur du corps 1 l'organe de sécurité 8 qui n'est plus bloqué en translation par la deuxième surface tronconique 106 de l'élément mâle B, de sorte que le ressort 3C repousse l'organe de sécurité 8 contre le verrou 6 dans sa position distale, en contact avec la surface cylindrique 108.

Le mouvement de l'organe de sécurité 8 provoque un déplacement du bouton 7 le long de l'axe Y-Y' et à l'opposé du fond 131 du logement borgne 13, de sorte que le bouton 7 se retrouve en position haute.

Ainsi, le mouvement de l'organe de sécurité 8 le long de l'axe X-X' et dans une direction allant de l'extrémité proximale vers l'extrémité distale de l'élément femelle A provoque un déplacement radial du bouton 7 vers l'extérieur du corps 1 de l'élément femelle 1.

Dans la configuration connectée, le clapet 2 est repoussé par l'élément mâle B hors de son siège, en position ouverte, à l'encontre de la force de rappel F3A du ressort 3A, de manière à permettre le passage du fluide entre l'élément femelle A et l'élément mâle B.

Le verrou 6 retient axialement l'élément mâle B dans l'élément femelle A grâce à la coopération entre le relief 64 et l'épaulement 107 de la collerette 102. Le verrou 6 est en position sortie et dépasse du corps 1 d'une troisième hauteur H3 supérieure à la deuxième hauteur H2 et égale à la première hauteur H1.

L'organe de sécurité 8 est en appui radial contre la surface cylindrique 108 de l'élément mâle, sur une zone diamétralement opposée au relief 64. Autrement dit, la normale au contact s'étend selon une direction radiale. L'organe de sécurité 8 maintient ainsi l'élément mâle B contre le relief 64 du verrou 6, qui est diamétralement opposé à la zone d'appui entre l'organe de sécurité 8 et l'élément mâle B, de sorte que lorsque le raccord est soumis à des vibrations, les mouvements des pièces mobiles du raccord ne provoquent pas une déconnexion intempestive.

Ainsi, l'organe de sécurité 8 maintient le verrou 6 dans sa position sortie lorsque l'élément mâle B est emmanché dans l'élément femelle A.

En variante, les jeux de construction permettent à l'organe de sécurité 8 de se situer dans une position diamétralement opposée à cette zone d'appui, sans qu'il y ait un contact effectif entre l'organe de sécurité 8 et l'élément mâle B. Toutefois, l'organe de sécurité 8 est alors apte à prendre appui radialement contre l'élément mâle B.

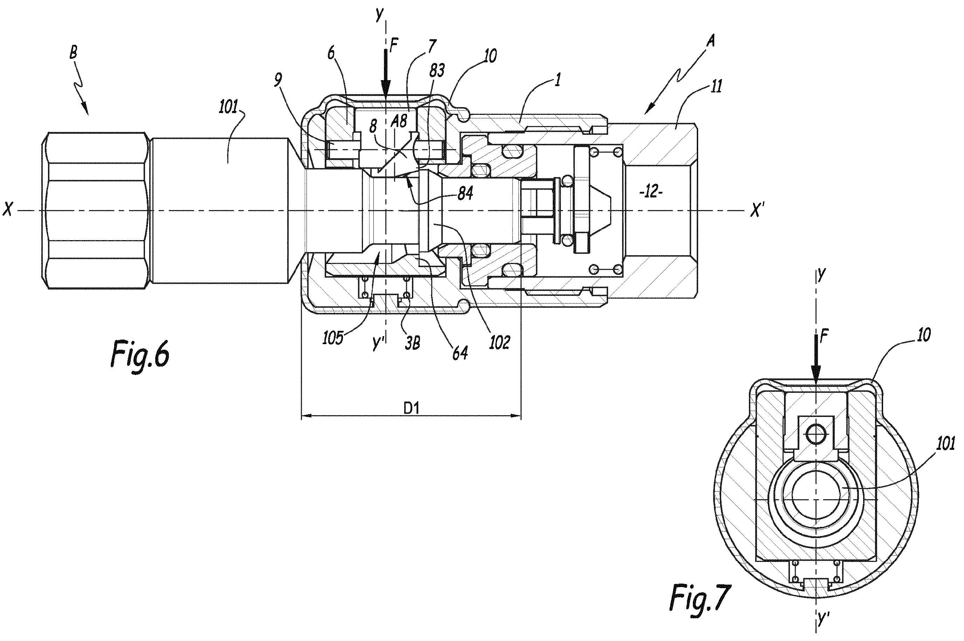

Les figures 6 et 7 montrent le raccord au terme d'une première étape de déconnexion, dans laquelle un utilisateur exerce un effort F de déplacement du bouton 7 en direction du fond 131 du logement 13, cet effort étant dirigé selon l'axe radial Y-Y' et déplaçant le bouton 7 dans sa position abaissée.

Le bouton 7 émerge à l'extérieur du verrou 6 dans sa position haute lorsque le raccord est en configuration emmanchée, de sorte que l'effort F exercé par l'utilisateur est localisé sur le bouton 7, le verrou 6 n'étant pas actionné directement par l'utilisateur.

L'organe de sécurité 8 coulisse alors le long de l'arbre 9 à l'opposé de l'embouchure 14 de l'élément femelle A, grâce à la coopération entre les surfaces obliques 72 et 82 qui réalise un renvoi d'angle. Le bouton 7 repousse ainsi l'organe de sécurité 8 dans sa position proximale, à l'encontre de la force de rappel F3C exercée par le ressort 3C.

Durant la première étape de déconnexion, l'organe de sécurité 8 coulisse contre la deuxième surface tronconique 106 de l'élément mâle B et vient en appui contre le fond de la gorge 105 jusqu'à ce que l'extrémité proximale 83 bute contre l'épaulement 107.

La partie proximale 83 de l'organe de sécurité 8 venant en butée contre l'épaulement 107 constitue un moyen de retenue additionnel apte à retenir l'élément mâle B emmanché dans l'élément femelle A lorsque le verrou 6 est dans sa position basse.

Ce moyen de retenue additionnel est distinct du premier moyen de retenue 64 du verrou 6 et du deuxième moyen de retenue 102 de l'élément mâle B.

L'enfoncement du bouton 7 provoque un mouvement du verrou 6 le long de l'axe radial Y-Y' en direction du fond 131 du logement borgne 13, à l'encontre de la force de rappel F3B exercée par le ressort 3B.

L'action F, par exemple manuelle, selon l'axe radial Y-Y' sur le dispositif de sécurité, dont le bouton 7 fait partie, provoque donc l'enfoncement du bouton 7, c'est-à-dire son déplacement entre sa position haute et sa position basse.

Premièrement, l'enfoncement du bouton 7 entraîne un coulissement radial de l'organe de sécurité 8 vers le fond 131 du logement 13. Ensuite, dans la même séquence de déconnexion, l'enfoncement du bouton 7 entraîne l'abaissement du verrou 6 le long de l'axe radial Y-Y'

Au terme de la première étape de déconnexion, le verrou 6 est en butée contre le fond 131 du logement borgne 13, dans une position basse, ou deuxième position, de sorte que le relief 64 est situé hors de la gorge 105 et ne coopère plus avec la collerette 102 de l'élément mâle B, de manière à autoriser l'élément mâle B à se libérer de la première profondeur d'emmanchement.

L'organe de sécurité 8 permet de maintenir l'élément mâle B et l'élément femelle A emmanchés tant que le verrou 6 est retenu dans sa deuxième position par l'effort F de l'utilisateur sur le dispositif de sécurité.

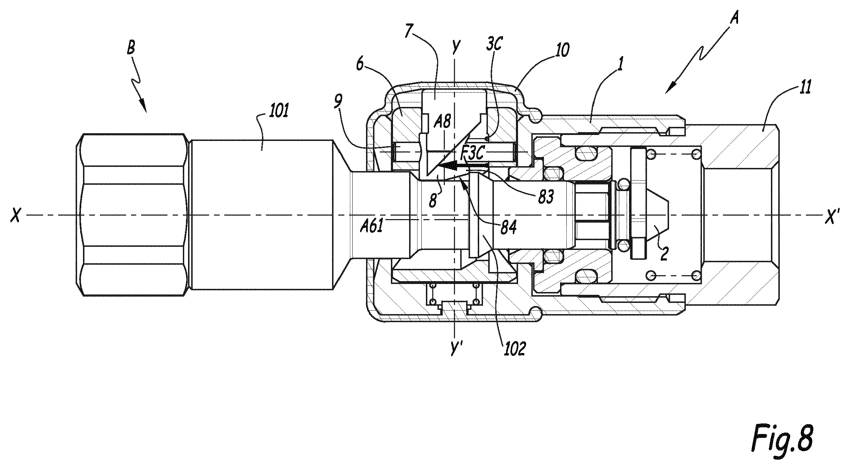

Dans une deuxième étape de déconnexion dont la fin est représentée à la figure 8, l'utilisateur relâche l'effort F exercé sur le bouton 7, et le ressort 3A repousse le clapet 2 en direction de son siège, le clapet 2 étant alors dans une position intermédiaire.

Le clapet 2 repousse l'élément mâle B hors de l'élément femelle A, et la collerette 102 de l'élément mâle B repousse simultanément l'organe de sécurité 8 dans sa position distale, aidé par la force de rappel F3C du ressort 3C

Le relâchement de l'effort F exercé sur le bouton 7 s'accompagne du coulissement de l'élément mâle B hors de l'élément femelle A, avec un glissement progressif et contrôlé entre la surface cylindrique 104 de l'élément mâle B contre la surface inclinée 84 de l'organe de sécurité 8.

Le mouvement de translation de l'organe de sécurité 8 s'accompagne d'un mouvement radial du bouton 7 vers sa position haute, grâce à la coopération des surfaces obliques 72 et 82. Le raccord est alors dans une position de purge dans laquelle la pression chute, l'élément mâle B étant retenu dans l'élément femelle A grâce à l'organe de sécurité 8. Cette position intermédiaire permet la déconnexion de l'élément mâle B et de l'élément femelle A sans effet coup de fouet. En d'autres termes, l'élément mâle B n'est pas éjecté violemment hors de l'élément femelle A.

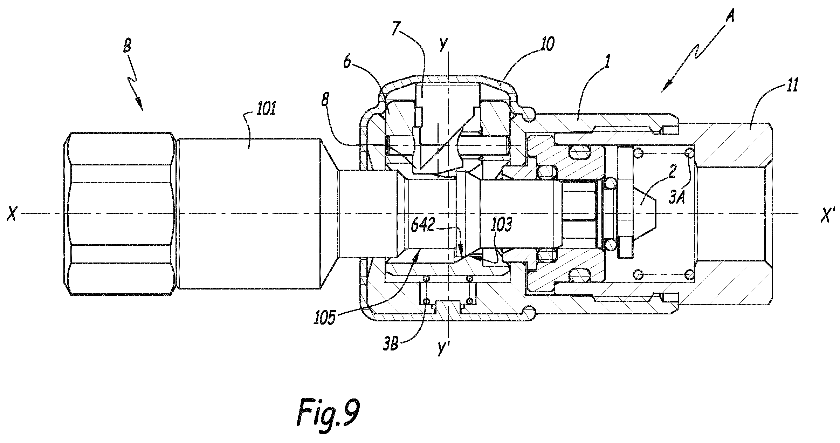

Dans une troisième étape de déconnexion représentée à la figure 9, le ressort 3B repousse le verrou 6 à l'opposé du fond 131 du logement borgne 13, les surfaces tronconiques 103 et 642 de l'élément mâle B et du verrou 6 étant alors en contact. Le verrou 6 entraine l'organe de sécurité 8 le long de l'axe radial Y-Y' et vers l'extérieur. L'organe de sécurité 8 se désengage de la rainure 105 et cesse de coopérer avec l'élément mâle B, de manière à permettre le recul de l'élément mâle B hors de l'élément femelle A, jusqu'à ce que le ressort 3A ait repoussé le clapet 2 et l'élément mâle B dans la configuration déconnectée du raccord.

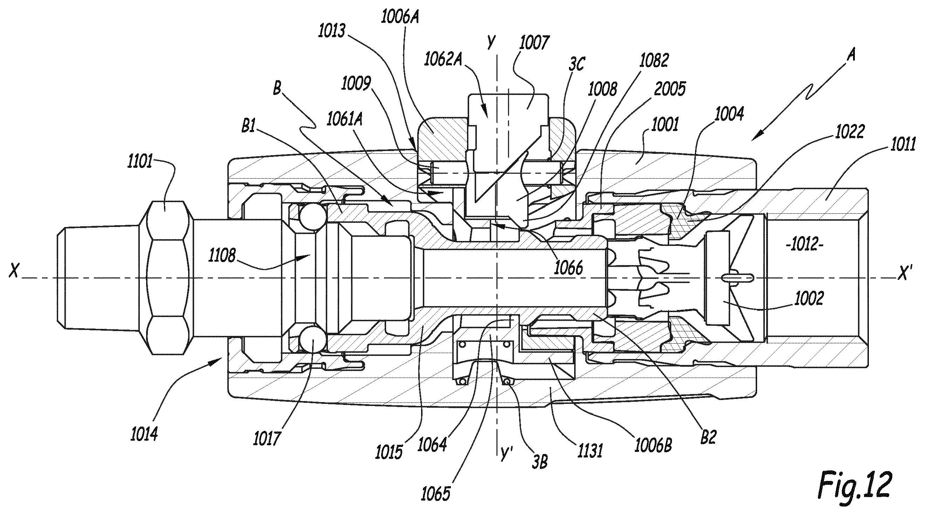

La figure 12 montre un raccord de type mono-impulsion conforme à un deuxième mode de réalisation de l'invention. Dans la suite, les éléments du raccord de la figure 12 semblables à ceux du raccord des figures 1 à 11 portent les mêmes références numériques, augmentés de 1000. Dans la suite, on ne décrit pas en détail les éléments analogues du deuxième mode de réalisation.

Le raccord de la figure 12 comprend un élément mâle 1101 et un élément femelle A équipé d'un adaptateur à billes B logé à l'intérieur d'un corps 1001 de l'élément femelle A et ayant la même fonction que la pièce intermédiaire décrite dans la demande de brevet EP 1 422 462.

A son extrémité distale, cet adaptateur B comporte des moyens femelles B1 de réception et de raccordement de l'élément mâle 1101, tandis qu'il définit un embout mâle B2 à son autre extrémité. Il s'agit donc d'un élément de raccordement à la fois mâle et femelle.

L'élément femelle A est équipé d'un verrou 1006 bipartite , monté à coulissement dans le corps 1001 de l'élément femelle A selon un axe radial Y-Y'. Le verrou 1006 est constitué d'une première partie ou partie externe 1006A et d'une seconde partie ou partie interne 1006B qui est reçue dans un logement creux 1061A de la partie externe 1006A débouchant à la fois en direction d'un fond 1131 d'un logement borgne 1013 du corps de l'élément femelle A, et en direction d'une embouchure 1014 du corps 1001 par laquelle peut être introduit un corps 1101 de l'élément mâle B.

La partie externe 1006A définit également une ouverture globalement circulaire 1062A qui jouxte le logement. Une paroi de fond 1065 de la partie interne 1006B est équipée d'un premier moyen de retenue formé par un relief 1064.

L'organe de sécurité 1008 est pourvu de moyens de retenue tels qu'une dent 1082 qui fait saillie en direction de l'adaptateur B. Ainsi, le dispositif de sécurité, plus précisément l'organe de sécurité 1008, comprend un moyen de retenue additionnel formé par la dent 1082 et apte à maintenir l'adaptateur B emmanché dans l'élément femelle A lorsque le verrou 1006 est maintenu dans sa position basse, ou deuxième position.

Une paroi intérieure de la partie interne 1006B du verrou comporte un épaulement 1066 perpendiculaire à l'axe X-X' et tourné vers l'extrémité proximale de l'élément femelle A. Cette face 1066 constitue un moyen de retenue supplémentaire de l'élément mâle B.

Des billes 1017 sont logées dans une gorge annulaire ménagée dans la partie femelle de l'adaptateur B. Les billes 1017 sont mobiles radialement et aptes à maintenir l'embout mâle 1101 en configuration emmanchée dans l'adaptateur B. L'élément mâle 1101 comporte une gorge annulaire 1108 apte à recevoir les billes 1017 qui sont mobiles radialement entre une position dans laquelle elles ne s'opposent pas à l'introduction de l'élément mâle 1101 dans l'adaptateur B, et une position dans laquelle le corps 1001 de l'élément femelle A maintient les billes 1017 dans la gorge 1108 de l'élément mâle B de manière à retenir axialement l'élément mâle 1101.

Le fonctionnement du raccord de la figure 12 est similaire au fonctionnement du raccord des figures 1 à 11, le verrou 1006 et l'organe de sécurité 1008 verrouillant l'adaptateur B en configuration emmanchée dans l'élément femelle A. L'adaptateur B est apte à maintenir le raccord en configuration emmanchée lorsque le verrou 1006 est dans sa première position, ou position sortie. Le verrou 1006 maintient alors l'adaptateur B à une première profondeur d'emmanchement, dans la configuration emmanchée de passage de fluide.

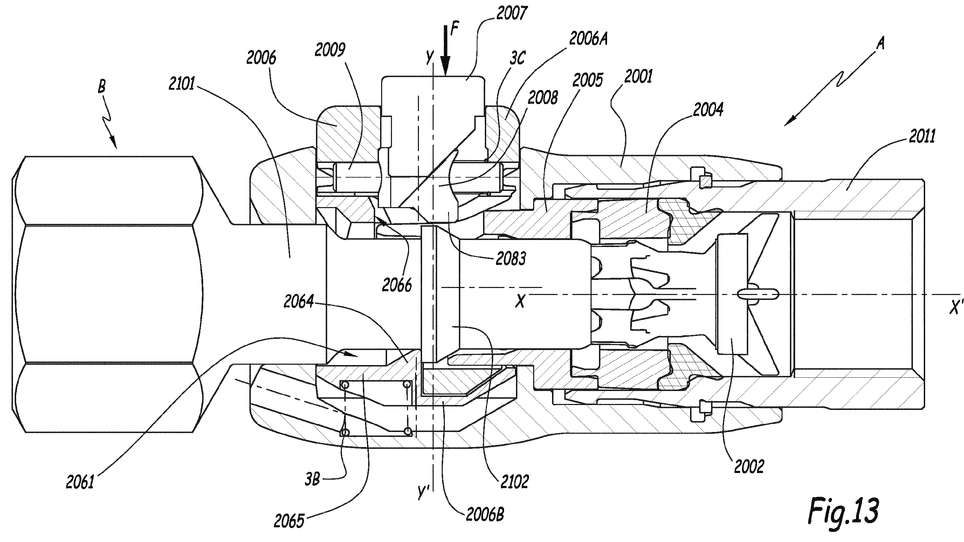

La figure 13 montre un raccord de type mono-impulsion conforme à un troisième mode de réalisation de l'invention, dans lequel les éléments similaires à ceux du raccord des figures 1 à 11 portent les mêmes références numériques, augmentés de 2000.

Le raccord comprend un élément ou embout mâle 2101 qui constitue une partie mâle B, ainsi qu'un élément femelle A. Les éléments A et B sont aptes à s'emmancher l'un dans l'autre selon un axe longitudinal X-X'.

L'élément femelle A est équipé d'un verrou bipartite 2006 monté à coulissement dans un corps 2001 de l'élément femelle A selon un axe radial Y-Y' et percé d'au moins une ouverture 2061 pour l'emmanchement de l'élément mâle B. Le verrou 2006 est constitué d'une première partie ou partie externe 2006A et d'une seconde partie ou partie interne 2006B. Une paroi de fond 2065 de l'ouverture 2061 est équipée d'un premier moyen de retenue formé par un relief 2064 de la partie interne 2006B.

Une paroi intérieure de la partie interne 2006B du verrou comporte un épaulement 2066 perpendiculaire à l'axe X-X' et tourné vers l'extrémité proximale de l'élément femelle A. Cet épaulement 2066 constitue un moyen supplémentaire de retenue de l'élément mâle B.

Un élément de raccordement 2011 est vissé à l'intérieur du corps 2001. Un clapet 2002 prend appui sur un joint 2041 retenu par un support 2004 en appui contre une bague 2005 de guidage de l'élément mâle B.

L'élément mâle B comprend une collerette 2102 qui constitue des deuxièmes moyens de retenue.

Le verrou 2006 est mobile entre une première position représentée à la figure 13, dans laquelle le relief 2064 est apte à coopérer avec la collerette 2102 de l'élément mâle B pour retenir l'élément mâle B et l'élément femelle A en configuration emmanchée.

Dans une deuxième position du verrou 2006, le verrou 2006 ne s'oppose pas au retrait de l'élément mâle B.

L'élément femelle A comprend un dispositif de sécurité apte à maintenir le verrou 2006 dans sa première position. Le dispositif de sécurité comprend un bouton 2007, un organe de sécurité 2008, un arbre 2009 ainsi qu'un ressort 3C de rappel de l'organe de sécurité dans sa position distale.

L'organe de sécurité 2008 comporte un élément en relief formé par une dent 2083 diamétralement opposée au relief 2064 en référence à l'axe X-X'.

Une action manuelle F sur le bouton 2007 selon l'axe radial Y-Y' provoque un déplacement du verrou 2006 depuis sa première position vers sa deuxième position.

En configuration connectée, l'élément mâle B est retenu emmanché dans l'élément femelle A par la dent 2083 qui bloque la collerette 2102.

En vue de la déconnexion du raccord, l'action manuelle F sur le bouton 2007 provoque en premier lieu un abaissement du verrou 2006 à l'encontre de la force de rappel exercée par le ressort 3B, ce qui provoque un retrait partiel de l'élément mâle B hors de l'élément femelle A et crée un abaissement de la pression du fluide dans le raccord.

La pression du fluide dans le raccord provoque un recul supplémentaire de l'élément mâle B. Dans cette position, l'élément mâle B n'est plus retenu par le verrou 2006 ni par l'organe de sécurité 2008, et le raccord atteint sa configuration déconnectée.

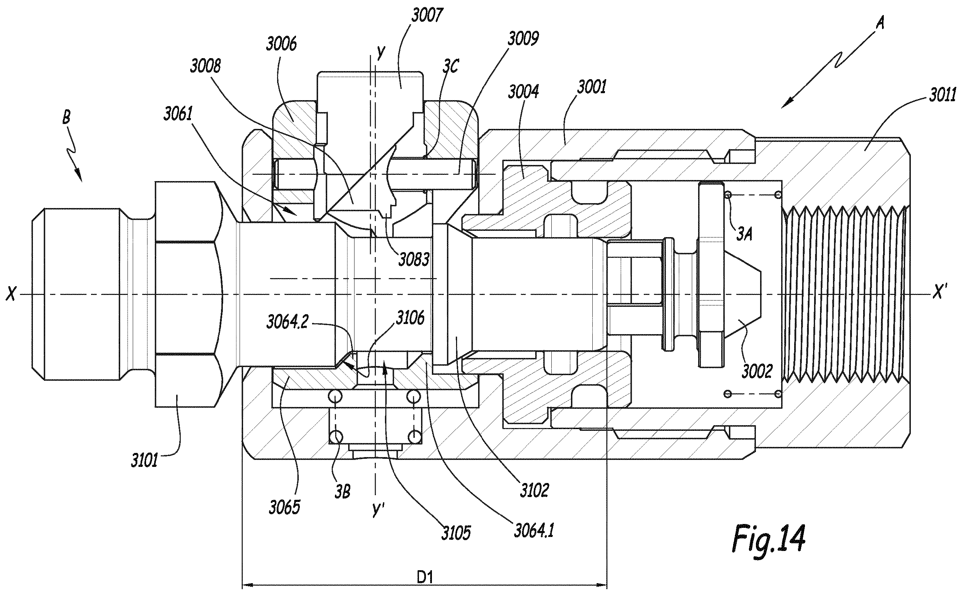

La figure 14 montre un raccord de type double-impulsion conforme à un quatrième mode de réalisation de l'invention, dans lequel les éléments semblables à ceux du premier mode de réalisation portent les mêmes références numériques, augmentés 3000.

Le raccord comprend un élément ou embout mâle 3101 qui constitue une partie mâle B, ainsi qu'un élément femelle A. Les éléments A et B sont aptes à s'emmancher l'un dans l'autre selon un axe longitudinal X-X'.

L'élément femelle A est équipé d'un verrou 3006 monté à coulissement dans un corps 3001 de l'élément femelle A selon un axe radial Y-Y' et percé d'au moins une ouverture 3061 pour l'emmanchement de l'élément mâle B. Une paroi de fond 3065 de l'ouverture 3061 est équipée d'un premier moyen de retenue et d'un moyen de retenue supplémentaire formés respectivement par des reliefs 3064.1 et 3064.2.

Un élément de raccordement 3011 est vissé à l'intérieur du corps 3001. Un clapet 3002 prend appui sur une bague 3004 de guidage de l'élément mâle B.

L'élément mâle B comprend une collerette 3102 qui constitue un deuxième moyen de retenue. La collerette 3102 délimite un premier bord d'une rainure 3105 ménagée dans l'élément mâle B. A l'opposé de la collerette 3102, la rainure 3105 est délimitée par une surface tronconique 3106.

Le moyen de retenue supplémentaire 3064.2 du verrou 3006 est distinct du premier moyen de retenue 3064.1 et du deuxième moyen de retenue 3102.

Le verrou 3006 est mobile entre une première position représentée à la figure 14, dans laquelle les reliefs 3064.1 et 3064.2 sont aptes à coopérer respectivement avec la collerette 3102 et avec la surface tronconique 3106 de l'élément mâle B pour retenir l'élément mâle B et l'élément femelle A en configuration emmanchée, à une première profondeur d'emmanchement D1.

Dans une deuxième position du verrou 3006, le verrou 3006 ne s'oppose pas au retrait de l'élément mâle B.

L'élément femelle A comprend un dispositif de sécurité apte à maintenir le verrou 3006 dans sa première position. Le dispositif de sécurité comprend un bouton 3007, un organe de sécurité 3008 pourvu d'une dent 3083 diamétralement opposée aux reliefs 3064.1 et 3064.2 autour de l'axe X-X', un arbre 3009 ainsi qu'un ressort 3C de rappel de l'organe de sécurité 3008 dans sa position distale.

Une action manuelle F sur le bouton 3007 selon l'axe radial Y-Y' provoque un déplacement du verrou 3006 depuis sa première position vers sa deuxième position.

En vue de la déconnexion du raccord, une première action manuelle F sur le bouton 3007 provoque un recul de l'élément mâle B par rapport à l'élément femelle A, de sorte que l'élément mâle B est libéré de l'emprise du verrou 3006 et se trouve dans une position dans laquelle la dent 3083 retient l'élément mâle B dans l'élément femelle A, à une deuxième profondeur d'emmanchement inférieure à la première profondeur D1, dans laquelle l'élément mâle B est moins enfoncé dans l'élément femelle A qu'à la première profondeur d'emmanchement. Lorsque l'élément mâle B est emmanché à la deuxième profondeur d'emmanchement, le raccord est dans une configuration d'obturation du passage du fluide entre les canalisations C1 et C2.

La dent 3083 constitue un moyen de retenue additionnel apte à maintenir l'élément mâle B emmanché dans l'élément femelle A lorsque le verrou 3006 est maintenu dans sa position basse.

Une deuxième action manuelle F ultérieure sur le bouton 3007 provoque la libération complète de l'élément mâle B, de manière à autoriser la déconnexion.

En pratique les deux actions manuelles F sont réalisées par deux appuis successifs semblables de l'utilisateur sur le bouton 3007.

La forme des verrous 6, 1006, 2006 et 3006 est liée au type de déconnexion du raccord. Pour les raccords du premier, deuxième et troisième modes de réalisation, les verrous 6, 1006, 2006 comportent un seul relief 64, 1064, 2064 de retenue de la partie mâle B. Pour le raccord du quatrième mode de réalisation, le verrou 3006 comporte deux reliefs 3064.1 et 3064.2 de retenue de la partie mâle B.

En variante, le renvoi d'angle réalisé par les surfaces obliques 72 et 82 peut être remplacé par un autre dispositif remplissant la même fonction.

Les capots 10 des raccords du deuxième, troisième et quatrième modes de réalisation n'ont pas été représentés mais leur mise en place est également prévue pour protéger les raccords des intrusions de poussières et d'éléments étrangers.

Dans le cadre de l'invention, les différents modes de réalisation et les variantes décrites peuvent être combinés entre eux, au moins partiellement.

## Revendications

1. Raccord rapide pour la jonction amovible de deux canalisations (C1, C2) parcourues par un fluide, le raccord comprenant une partie mâle (B) et un élément femelle (A) aptes à s'emmancher l'un dans l'autre selon un axe longitudinal (X-X'), l'élément femelle (A) étant équipé :
- d'un dispositif de verrouillage (6 ; 1006 ; 2006 ; 3006) monté à coulissement dans un corps (1 ; 1001 ; 2001 ; 3001) de l'élément femelle (A) selon un axe radial (Y-Y') et percé d'au moins une ouverture (61 ; 1061 A; 2061 ; 3061) pour l'emmanchement de la partie mâle (B), une paroi de l'ouverture étant équipée d'un premier moyen de retenue (64 ; 1064 ; 2064 ; 3064.1), le dispositif de verrouillage (6 ; 1006 ; 2006 ; 3006) étant mobile entre :
- une première position dans laquelle le premier moyen de retenue est apte à coopérer avec un deuxième moyen de retenue (102; 1102; 2102; 3102,) correspondant de la partie mâle (B) pour retenir la partie mâle (B) dans l'élément femelle (A) à une première profondeur d'emmanchement (D1) en configuration emmanchée de passage de fluide,
- une deuxième position dans laquelle le dispositif de verrouillage autorise la partie mâle (B) à se libérer de la première profondeur d'emmanchement (D1),
- d'un dispositif de sécurité apte à maintenir le dispositif de verrouillage (6 ; 1006 ; 2006 ; 3006) dans sa première position lorsque la partie mâle (B) est en configuration emmanchée dans l'élément femelle (A),
**caractérisé en ce que** lorsque le dispositif de verrouillage est dans sa première position, une action (F) sur le dispositif de sécurité selon l'axe radial (Y-Y') libère le dispositif de verrouillage de sa première position.

2. Raccord selon la revendication 1, **caractérisé en ce que** le dispositif de sécurité comprend un organe de sécurité (8 ; 1008 ; 2008 ; 3008) monté à coulissement sur un arbre (9 ; 1009 ; 2009 ; 3009) s'étendant perpendiculairement à l'axe radial (Y-Y') et **en ce que** l'organe de sécurité est mobile entre :
- une première position dans laquelle le dispositif de verrouillage (6 ; 1006 ; 2006 ; 3006) verrouille la partie mâle (B) et l'élément femelle (A) en configuration emmanchée et dans laquelle l'organe de sécurité (8 ; 1008 ; 2008 ; 3008) est apte à prendre appui radialement sur la partie mâle (B) sur une zone diamétralement opposée au premier moyen de retenue (64 ; 1064 ; 2064 ; 3064.1) et
- une deuxième position dans laquelle l'organe de sécurité ne prend pas appui sur la partie mâle (B).

3. Raccord selon la revendication 2, **caractérisé en ce que** le dispositif de sécurité comprend des moyens élastiques (3C) qui tendent à repousser l'organe de sécurité (8 ; 1008 ; 2008 ; 3008) dans sa première position.

4. Raccord selon l'une des revendications précédentes, **caractérisé en ce que** le dispositif de sécurité comprend un bouton (7 ; 1007 ; 2007 ; 3007) logé partiellement dans le dispositif de verrouillage (6 ; 1006 ; 2006 ; 3006) et mobile selon l'axe radial (Y-Y') dans le dispositif de verrouillage.

5. Raccord selon la revendication 4, **caractérisé en ce que** l'action (F) exercée sur le bouton provoque le déplacement du bouton entre une position de repos et une position de déverrouillage.

6. Raccord selon la revendication 5, **caractérisé en ce que** l'action manuelle (F), exercée sur le bouton (7 ; 1007 ; 2007 ; 3007), entraine un déplacement de l'organe de sécurité (8 ; 1008 ; 2008 ; 3008) depuis sa première position vers sa deuxième position.

7. Raccord selon la revendication 6, **caractérisé en ce que** le déplacement de l'organe de sécurité (8 ; 1008 ; 2008 ; 3008) le long de l'axe longitudinal (X-X') provoque un déplacement du bouton (7 ; 1007 ; 2007 ; 3007) le long de l'axe radial (Y-Y').

8. Raccord selon la revendication 7, **caractérisé en ce que** le bouton (7 ; 1007 ; 2007 ; 3007) et l'organe de sécurité (8 ; 1008 ; 2008 ; 3008) comprennent chacun une surface oblique (72, 82) s'étendant dans un plan formant un angle (α) non nul avec un plan longitudinal (P1) perpendiculaire à l'axe radial (Y-Y'), **en ce qu'**une normale aux surfaces obliques s'étend dans un plan passant par l'axe longitudinal (X-X') et l'axe radial (Y-Y') et **en ce que** durant le déplacement de l'organe de sécurité (8 ; 1008 ; 2008 ; 3008) depuis sa première position vers sa deuxième position, les surfaces obliques (72, 82) du bouton (7 ; 1007 ; 2007 ; 3007) et de l'organe de sécurité (8) glissent en contact surfacique l'une contre l'autre.

9. Raccord selon la revendication 8, **caractérisé en ce que** l'angle (α) est égal à 45°.

10. Raccord selon l'une des revendications précédentes, **caractérisé en ce que** la partie mâle (B) comprend un adaptateur (1015) logé à l'intérieur de l'élément femelle (A) et comprenant des billes mobiles radialement et aptes à maintenir un embout mâle (1101) du raccord en configuration emmanchée dans l'adaptateur (1015), lorsque le dispositif de verrouillage (1006) est dans une première position dans laquelle il maintient l'adaptateur (1015) à une première profondeur d'emmanchement de l'adaptateur dans l'élément femelle (A) et en configuration emmanchée de passage de fluide.

11. Raccord selon l'une des revendications précédentes, **caractérisé en ce que** le dispositif de sécurité comprend un moyen de retenue additionnel (83 ; 1082 ; 3083), tel qu'une dent, apte à maintenir la partie mâle (B) emmanchée dans l'élément femelle (A) lorsque le dispositif de verrouillage est maintenu dans sa deuxième position.

12. Raccord selon l'une des revendications précédentes **caractérisé en ce que** le dispositif de verrouillage (1006 ; 2006) comprend une première partie (1006A ; 2006A) et d'une seconde partie (1006B ; 2006B) logée à l'intérieur de la première partie.

13. Raccord selon l'une des revendications précédentes, **caractérisé en ce que** le dispositif de verrouillage (1006; 2006; 3006) comprend un moyen de retenue supplémentaire (1066 ; 2066 ; 3064.2) apte à retenir la partie mâle (B) dans l'élément femelle (A) à une seconde profondeur d'emmanchement dans une configuration d'obturation du passage de fluide entre les canalisations (C1, C2).

14. Raccord selon l'une des revendications précédentes, **caractérisé en ce que** durant une étape intermédiaire de connexion, la partie mâle (B) repousse l'organe de sécurité (8 ; 1008 ; 2008 ; 3008) vers sa deuxième position.

15. Raccord selon l'une des revendications précédentes, **caractérisé en ce qu'**une enveloppe étanche et souple est disposée sur l'élément femelle (A) et recouvre le bouton (7 ; 1007 ; 2007 ; 3007) et le dispositif de verrouillage (6 ; 1006 ; 2006 ; 3006), notamment un capot réalisé en une matière élastique.

## Patentansprüche

1. Schnellkupplung für die lösbare Verbindung von zwei von einem Fluid durchströmten Leitungen (C1, C2), wobei die Kupplung ein Einsteckelement (B) und ein Aufnahmeelement (A) umfasst, die geeignet sind, gemäß einer Längsachse (X-X') ineinander gesteckt zu werden, wobei das Aufnahmeelement (A) ausgerüstet ist mit:
- einer Verriegelungsvorrichtung (6; 1006; 2006; 3006), die gleitend in einem Körper (1; 1001; 2001; 3001) des Aufnahmeelements (A) gemäß einer radialen Achse (Y-Y') montiert sind und von mindestens einer Öffnung (61; 1061A; 2061; 3061) für das Einsetzen des Einsteckelements (B) durchbohrt ist, wobei eine Wand der Öffnung mit einem ersten Haltemittel (64; 1064; 2064; 3064.1) ausgerüstet ist, wobei die Verriegelungsvorrichtung (6; 1006; 2006; 3006) beweglich ist zwischen:
- einer ersten Position, in der das erste Haltemittel in der Lage ist, mit einem korrespondierenden zweiten Haltemittel (102; 1102; 2102; 3102) des Einsteckelements (B) zusammenzuarbeiten, um das Einsteckelement (B) in dem Aufnahmeelement (A) in einer ersten Einstecktiefe (D1) in der zusammengefügten Konfiguration des Fluiddurchgangs zu halten,
- einer zweiten Position, in der die Verriegelungsvorrichtung dem Einsteckelement (B) gestattet, sich von seiner ersten Einstecktiefe (D1) zu befreien,
- einer Sicherheitsvorrichtung, die geeignet ist, die Verriegelungsvorrichtung (6; 1006; 2006; 3006) in ihrer ersten Position zu halten, wenn das Einsteckelement (B) in der mit dem Aufnahmeelement (A) zusammengefügten Konfiguration ist,
**dadurch gekennzeichnet, dass**, wenn die Verriegelungsvorrichtung in ihrer ersten Position ist, eine Einwirkung (F) auf die Sicherheitsvorrichtung gemäß der radialen Achse (Y-Y') die Verriegelungsvorrichtung aus ihrer ersten Position freisetzt.

2. Kupplung nach Anspruch 1, **dadurch gekennzeichnet, dass** die Sicherheitsvorrichtung ein Sicherheitselement (8; 1008; 2008; 3008) umfasst, das gleitend auf einer Achse (9; 1009; 2009; 3009) montiert ist, die sich senkrecht zur radialen Achse (Y-Y') erstreckt, und dass das Sicherheitselement beweglich ist zwischen:
- einer ersten Position, in der die Verriegelungsvorrichtung (6; 1006; 2006; 3006) das Einsteckelement (B) und das Aufnahmeelement (A) in der zusammengefügten Konfiguration verriegelt und in der das Sicherheitselement (8; 1008; 2008; 3008) in der Lage ist, sich radial an dem Einsteckelement (B) über eine Zone, die diametral dem ersten Haltemittel (64; 1064; 2064; 3064.1) gegenüberliegt, abzustützen, und
- einer zweiten Position, in der das Sicherheitselement sich nicht an dem Einsteckelement (B) abstützt.

3. Kupplung nach Anspruch 2, **dadurch gekennzeichnet, dass** die Sicherheitsvorrichtung elastische Mittel (3C) umfasst, die dazu neigen, das Sicherheitselement (8; 1008; 2008; 3008) in seine erste Position zurückzuschieben.

4. Kupplung nach einem der vorhergehenden Ansprüche, **dadurch gekennzeichnet, dass** die Sicherheitsvorrichtung einen Knopf (7; 1007; 2007; 3007) umfasst, der teilweise in der Verriegelungsvorrichtung (6; 1006; 2006; 3006) aufgenommen ist und gemäß der radialen Achse (Y-Y') in der Verriegelungsvorrichtung beweglich ist.

5. Kupplung nach Anspruch 4, **dadurch gekennzeichnet, dass** die auf den Knopf ausgeübte Einwirkung (F) die Verschiebung des Knopfes zwischen einer Ruhestellung und einer Entriegelungsstellung hervorruft.

6. Kupplung nach Anspruch 5, **dadurch gekennzeichnet, dass** die manuelle auf den Knopf (7; 1007; 2007; 3007) ausgeübte Einwirkung (F) eine Verschiebung des Sicherheitselements (8; 1008; 2008; 3008) aus seiner ersten Position in seine zweite Position herbeiführt.

7. Kupplung nach Anspruch 6, **dadurch gekennzeichnet, dass** die Verschiebung des Sicherheitselement (8; 1008; 2008; 3008) entlang der Längsachse (X-X') eine Verschiebung des Knopfes (7; 1007), 2007; 3007) entlang der radialen Achse (Y-Y') hervorruft.

8. Kupplung nach Anspruch 7, **dadurch gekennzeichnet, dass** der Knopf (7; 1007; 2007; 3007) und das Sicherheitselement (8; 1008; 2008; 3008) jeweils eine schräge Fläche (72, 82) umfassen, die sich in einer Ebene erstrecken, die einen Winkel (α), der nicht null ist, mit einer Längsebene (P1) senkrecht zur radialen Achse (Y-Y') bildet, dass eine Senkrechte zu den schrägen Flächen sich in einer Ebene erstreckt, die durch die Längsachse (X-X') und die radiale Achse (Y-Y') hindurchgeht und dass während der Verschiebung des Sicherheitselements (8; 1008; 2008; 3008) aus seiner ersten Position in seine zweite Position die schrägen Flächen (72, 82) des Knopfes (7; 1007; 2007; 3007) und des Sicherheitsorgans (8) in gegenseitigem Flächenkontakt gleiten.

9. Kupplung nach Anspruch 8, **dadurch gekennzeichnet, dass** der Winkel (α) gleich 45° ist.

10. Kupplung nach einem der vorhergehenden Ansprüche, **dadurch gekennzeichnet, dass** das Einsteckelement (B) einen Adapter (1015) umfasst, der im Inneren des Aufnahmeelements (A) aufgenommen ist und radial bewegliche Kugeln umfasst, die geeignet sind, einen Einsteckansatz (1101) der Kupplung in einer in den Adapter (1015) eingesteckten Konfiguration zu halten, wenn die Verriegelungsvorrichtung (1006) in einer ersten Position ist, in der sie den Adapter (1015) in einer ersten Einstecktiefe des Adapters in dem Aufnahmeelement (A) und in der zusammengefügten Konfiguration des Fluiddurchgangs hält.

11. Kupplung nach einem der vorhergehenden Ansprüche, **dadurch gekennzeichnet, dass** die Sicherheitsvorrichtung ein zusätzliches Haltemittel (83; 1082; 3083), wie einen Zahn umfasst, das geeignet ist, das Einsteckelement (B) in der mit dem Aufnahmeelement (A) zusammengefügten Stellung zu halten, wenn die Verriegelungsvorrichtung in ihrer zweiten Position gehalten ist.

12. Kupplung nach einem der vorhergehenden Ansprüche, **dadurch gekennzeichnet, dass** die Verriegelungsvorrichtung (1006; 2006) ein erstes Teil (1006A; 2006A) und ein zweites Teil (1006B; 2006B) umfasst, wobei das zweite Teil im Inneren des ersten Teils aufgenommen ist.

13. Kupplung nach einem der vorhergehenden Ansprüche, **dadurch gekennzeichnet, dass** die Verriegelungsvorrichtung (1006; 2006; 3006) ein zusätzliches Haltemittel (1066; 2066; 3064.2) umfasst, das geeignet ist, das Einsteckelement (B) in dem Aufnahmeelement (A) in einer zweiten Einstecktiefe in einer Konfiguration des Verschließens des Fluiddurchgangs zwischen den Leitungen (C1, C2) zu halten.

14. Kupplung nach einem der vorhergehenden Ansprüche, **dadurch gekennzeichnet, dass** während eines Verbindungszwischenschritts das Einsteckelement (B) das Sicherheitselement (8; 1008; 2008; 3008) in seine zweite Stellung zurückschiebt.

15. Kupplung nach einem der vorhergehenden Ansprüche, **dadurch gekennzeichnet, dass** eine dichte und weiche Hülle, insbesondere eine aus einem elastischen Material hergestellte Haube, auf dem Aufnahmeelement (A) angeordnet ist und den Knopf (7; 1007; 2007; 3007) und die Verriegelungsvorrichtung (6; 1006; 2006; 3006) bedeckt.

## Claims

1. A quick-acting coupling for the removable junction of two pipelines (C1, C2) traveled by a fluid, the coupling comprising a male part (B) and a female element (A) that can fit into one another along a longitudinal axis (X-X'), the female element (A) being equipped with:
- a locking device (6; 1006; 2006; 3006) slidingly mounted in a body (1; 1001; 2001; 3001) of the female element (A) along a radial axis (Y-Y') and pierced with at least one opening (61; 1061A; 2061; 3061) for fitting the male part (B), one wall of the opening being equipped with a first retaining means (64; 1064; 2064; 3064.1), the locking device (6; 1006; 2006; 3006) being movable between:
- a first position in which the first retaining means can cooperate with a corresponding second retaining means (102; 1102; 2102; 3102) of the male part (B) to keep the male part (B) in the female element (A) at a first fitting depth (D1) in the fitted fluid passage configuration,
- a second position in which the locking device allows the male part (B) to release the female element outside the first fitting depth (D1),
- a safety device able to keep the locking device (6; 1006; 2006; 3006) in its first position when the male part (B) is in the configuration fitted in the female element (A).
**characterized in that** when the locking device is in its first position, an action (F) on the safety device along the radial axis (Y-Y') releases the locking device from its first position.

2. The coupling according to claim 1, **characterized in that** the safety device comprises a safety member (8; 1008; 2008; 3008) slidably mounted on a shaft (9; 1009; 2009; 3009) extending perpendicular to the radial axis (Y-Y') and **in that** the safety member is movable between:
- a first position in which the locking device (6; 1006; 2006; 3006) locks the male part (B) and the female element (A) in the fitted configuration and in which the safety member (8; 1008; 2008; 3008) can bear radially on the male part (B) on a zone diametrically opposite the first retaining means (64; 1064; 2064; 3064.1), and
- a second position in which the safety member does not bear on the male part (B).

3. The coupling according to claim 2, **characterized in that** the safety device comprises elastic means (3C) that tend to push the safety member (8; 1008; 2008; 3008) back into its first position.

4. The coupling according to one of the preceding claims, **characterized in that** the safety device comprises a button (7; 1007; 2007; 3007) partially housed in the locking device (6; 1006; 2006; 3006) and movable along the radial axis (Y-Y') in the locking device

5. The coupling according to claim 4, **characterized in that** the action (F) exerted on the button causes the button to move between an idle position and an unlocked position.

6. The coupling according to claim 5, **characterized in that** the manual action (F) exerted on the button (7; 1007; 2007; 3007) causes the safety member (8; 1008; 2008; 3008) to move from its first position to its second position.

7. The coupling according to claim 6, **characterized in that** the movement of the safety member (8; 1008; 2008; 3008) along the longitudinal axis (X-X') causes the button (7; 1007; 2007; 3007) to move along the radial axis (Y-Y').

8. The coupling according to claim 7, **characterized in that** the button (7; 1007; 2007; 3007) and the safety member (8; 1008; 2008; 3008) each comprise an oblique surface (72, 82) extending in a plane forming a non-zero angle (α) with the longitudinal plane (P1) perpendicular to the radial axis (Y-Y'), **in that** a normal to the oblique surfaces extend in a plane passing through the longitudinal axis (X-X') and the radial axis (Y-Y') and **in that** during the movement of the safety member (8; 1008; 2008; 3008) from its first position to its second position, the oblique surfaces (72, 82) of the button (7; 1007; 2007; 3007) and the safety member (8) slide in surface contact with each other.

9. The coupling according to claim 8, **characterized in that** the angle (α) is equal to 45°.

10. The coupling according to one of the preceding claims, **characterized in that** the male part (B) comprises an adapter (1015) housed inside the female element (A) and comprising beads radially movable and able to maintain a male tip (1101) of the coupling in the configuration fitted in the adapter (1015), when the locking device (1006) is in a first position in which it keeps the adapter (1015) at a first fitting depth of the adapter in the female element (A) and in the fitted fluid passage configuration.

11. The coupling according to one of the preceding claims, **characterized in that** the safety device comprises an additional retaining means (83; 1082, 3083), such as a tooth, able to keep the male part (B) fitted in the female element (A) when the locking device is kept in its second position.

12. The coupling according to one of the preceding claims, **characterized in that** the locking device (1006; 2006) comprises a first part (1006A; 2006A) and a second part (1006B; 2006B) housed inside the first part.

13. The coupling according to one of the preceding claims, **characterized in that** the locking device (1006; 2006; 3006) comprises an additional retaining means (1066, 2066; 3064.2) able to retain the male part (B) in the female element (A) at a second fitting depth in a configuration closing off the fluid passage between the pipelines (C1, C2).

14. The coupling according to one of the preceding claims, **characterized in that** during an intermediate connection step, the male part (B) pushes the safety member (8; 1008; 2008; 3008) back toward its second position.

15. The coupling according to one of the preceding claims, **characterized in that** a tight and flexible enclosure is positioned on the female element (A), and covers the button (7; 1007; 2007; 3007) and the locking device (6; 1006; 2006; 3006), in particular a cap made from an elastic material.
